Europäisches Patentamt

European Patent Office

Office européen des brevets

(19)

(11) Veröffentlichungsnummer: **0 098 786**
A2

# (12) EUROPÄISCHE PATENTANMELDUNG

(21) Anmeldenummer: **83630081.4**

(51) Int. Cl.³: **B 23 K 35/32**

(22) Anmeldetag: **13.05.83**

(30) Priorität: **17.05.82 LU 84151**

(43) Veröffentlichungstag der Anmeldung: **18.01.84**
**Patentblatt 84/3**

(84) Benannte Vertragsstaaten: **BE CH DE FR GB IT LI SE**

(71) Anmelder: **ARBED S.A. Division de Gentbrugge,**
**Kerkstraat 106, B-9219 Gentbrugge (BE)**

(72) Erfinder: **Van Hoecke, Gustave, Meidoorndreef 26,**
**B-9219 Gentbrugge (BE)**

(74) Vertreter: **Leitz, Paul, Administration Centrale de**
**l'ARBED Case Postale 1802, L-2930 Luxembourg (LU)**

(54) Verfahren zum Vermeiden von Lackierungsfehlern an Schweissnähten.

(57) Verfahren zum Vermeiden von Lackierungsfehlern an Schweissnähten an Stahl, im Rahmen eines Schweissverfahrens durch Metall-Aktiv-Schweissen und im Hinblick auf eine anschliessende Lackierung mittels Elektrophorese ohne spezifische Zwischenbehandlung der Schweissstelle. Man verwendet einen Schweissdraht, in welchem Elemente enthalten sind, deren Oxydationsprodukte einen Schmelzpunkt oberhalb von 1600°C aufweisen. Der Schweissdraht enthält Ti (0,15 - 0,30%), Al (0,03 - 0,06%), Mn (1,00 - 1,60%) und Si (0,50 - 0,80%), oder Ti (0 - 1%), V (0 - 1%), Nb (0 - 1%) und Zr (0 - 1%), wobei die Summe der Zusatz-Konzentrationen über 0,05% liegt.

EP 0 098 786 A2

ACTORUM AG

## Verfahren zum Vermeiden von Lackierungsfehlern an Schweissdrähten

Die Erfindung betrifft ein Verfahren zum Vermeiden von Lackierungsfehlern an Schweissnähten an Stahl,im Rahmen eines Schweissverfahrens durch Metall-Aktivgas-Schweissen und wobei die Farbe nachträglich mittels Elektrophorese aufgetragen wird.

Eines der bekanntesten Verfahren zum Verbinden von Blechen in der Automobilindustrie ist das Metall-Aktivgas-Schweissen. Als Elektrode dient hierbei bekanntlich ein Draht, der von einer Rolle abgespult und der Schweisspistole zugeführt wird. Der Schmelzfluss entsteht durch das unmittelbare örtlich begrenzte Einwirken eines Lichtbogens, der zwischen der Elektrode und dem Werkstück brennt. Als Schutzgas wird Kohlendioxyd verwendet oder Mischungen von Argon und Kohlendioxyd bzw. Argon, Helium und Kohlendioxyd und ggf. Sauerstoff. Bei der hohen Temperatur des Lichtbogens dissoziiert Kohlendioxyd, der freiwerdende Sauerstoff oxydiert teilweise das flüssige Eisen. Die gebildeten Eisenoxyde reagieren mit dem im flüssigen Schweissgut vorhandenen Kohlenstoff unter Bildung von Kohlenmonoxyd. Da dieses Gas leicht Poren in der Naht bildet, versucht man die Reaktion des Kohlenstoff mit dem Eisenoxyd zu verhindern. Dies geschieht insbesondere dadurch, dass man bei der Herstellung der Drahtelektrode Stoffe zusetzt, die eine höhere Affinität zu Sauerstoff haben als Eisen und die keine gasförmige Verbindung mit Sauerstoff eingehen. Die Drahtelektrode enthält deshalb üblicherweise Mangan (1,00-2,00 %) und Silizium (0,50-1,00 %).

Nachdem die Automobilkarrosserie zusammengeschweisst ist wird diese phosphatiert. Dann wird die erste Schutzfarbschicht mittels Elektrophorese, meistens wählt man Kataphorese, auf das Metall aufgetragen. Hierbei wurde beobachtet, dass an den Schweissnähten, falls diese nicht bspw. durch Abschleifen gesäubert werden, Lackierungsfehler entstehen.Werden die oberen Lackschichten beim Benutzen des Fahrzeugs mechanisch bspw. durch Steinschlag beschädigt, so wird das ungeschützte Blech unverzüglich korrodieren; es erfolgt ein vorzeitiges, von den Schweissnähten ausgehendes Rosten der Karrosserie. Ein sorgfältiges Säubern aller Schweissnähte einer Karrosserie ist ein aufwendiges Unternehmen und wird, falls die Schweissstellen den Blicken des Benutzers nicht zugänglich sind, des öfteren unterlassen.

Querschliffe durch die Schweissnaht zeigen an den fehlerhaften Stellen massive Ansammlungen von Schlacken. Diese Schlacken, die elektrisch isolierend wirken, widersetzen sich dem Absetzen von Farbe bei den verwendeten Elektrophorese-Verfahren und sind die Ursache des beobachteten Mangels. Die Untersuchungder Schlacke zeigt, dass sie vom Typ (Mn)FeO.SiO2 ist und einen Schmelzpunkt hat, der knapp unter 1300° C liegt.Da diese Schlacken hauptsächlich aus Mangan- und Siliziumoxyden bestehen und keine alkalischen Oxyde enthalten, kann man annehmen, dass die Schlacken durch Oxydation der Schweisschmelze entstehen. Wegen ihres geringen spezifischen Gewichts bewegen sich diese relativ niedrigschmelzenden Oxydationsprodukte zur Oberfläche der flüssigen Schweissnaht, sammeln sich an bestimmten Punkten und laufen schliesslich zu den niedrigsten Stellen der Schweissnaht, d.h. den Schweissrändern, wo sie sich verfestigen.

Das Ziel der Erfindung besteht darin, ein Verfahren vorzuschlagen, das jegliches Ansammeln von elektrisch isolierenden Schlacken an den Schweissnähten vermeidet und somit ein fehlerfreies Auftragen von Farbe mittels Elektrophorese erlaubt.

Dieses Ziel wird erreicht durch das erfindungsgemässe Verfahren welches zum Schweissen einen Schweissdraht vorsieht, in welchem Elemente enthalten sind, deren Oxydationsprodukte einen Schmelzpunkt oberhalb von 1600° C aufweisen.

Weitere vorteilhafte Ausgestaltungen der Erfindung sind in den Unteransprüchen wiedergegeben.

Der Grundgedanke der Erfindung besteht somit darin, die Zusammensetzung der Oxydationsprodukte und Schlacken, die sich an der Schweisstelle bilden, derart einzustellen, dass diese sich in der Schweissnaht verteilen. Damit die eventuell auftretenden geringen Schlackenansammlungen an der Oberfläche der Schweisstelle nicht trotzdem zu Lackierungsfehlern führen, sollten diese ausserdem zumindest schwach elektrisch leitfähig sein.

Versuche mit reinem Titan als einzigem Zusatzstoff führten zu einer schlackenfreien Schweissnaht, die sich anschliessend anstandslos bei Kataphoreseverfahren mit Farbe bekleiden liess. Titan bindet bekanntlich Sauerstoff ab und bildet mit Kohlenstoff und Stickstoff hochschmelzende Karbide und Nitride. Versuche mit billigem Titan als Zusatzstoff, das bekanntlich einen hohen Prozentsatz Aluminium enthält, ergaben ebenso einen Schweissdraht der schlackenfreie Nähte hervorbrachte. Aber da das Schweissgut nicht nur verformbar und schlagfest, sondern auch hart sein muss, ist es zu empfehlen, dem Draht noch andere Elemente zuzusetzten, die die notwendige Härte verleihen. Hierbei bietet sich aus Kostengründen Silizium an, als das billigste Desoxydationsmittel, sowie Mangan, das nicht nur die Härte der Schweisstelle erhöht, sondern sich ausserdem mit restlichen, im Stahl vorhandenen Schwefel verbindet.

Versuche der Anmelderin haben ergeben, dass ein Draht dem als Zusatzstoff Ti, Al, Si und Mn zugesetzt wurden, zu einer Schweissnaht führt, die praktisch frei ist von Schlackenansammlungen an ihrer Oberfläche. Ausserdem sind die in geringen Mengen auftretenden Schlacken schwach leitfähig, so dass durch deren Vorhandensein keine nachteiligen Lackierungsfehler beobachtet werden konnten.

Von den oben angeführten Zusatzstoffen hat sich ihre Verwendung in folgenden Konzentrationen, nicht nur aus der Sicht der Schweisstellengüte, sondern auch aus ökonomischen Ueberlegungen, bewährt:

Mn : 1,00 - 1,60 %

Si : 0,50 - 0,80 %

Al : 0,03 - 0,06 %

Ti : 0,15 - 0,30 %

Wegen der starken Entkohlung der Schmelze durch Titan sollte die Kohlenstoffkonzentration des Drahtes etwa doppelt so hoch sein wie bei normalem Schweissdraht (0,10 - 0,15 %). Die restlichen im Draht vorhandenen Verunreinigungen (P: 0.025 %; S: 0,025 %; Cr: 0,10 %) waren nicht willentlich hinzugefügt worden und sind bei diesen Betrachtungen nur von untergeordneter Bedeutung.

Das Titan kann wenigstens teilweise durch andere hochschmelzende Oxyde bildende Elemente ersetztwerden. In Betracht treten hier insbesondere Zirkon, Vanadium und Niob. Ausserdem dürften Mischungen dieser Elemente die gewünschte Schweissnahtgüte hervorbringen.

Patentansprüche

1. Verfahren zum Vermeiden von Lackierungsfehlern an Schweissnähten an Stahl,im Rahmen eines Schweissverfahrens durch Metall-Aktiv-Schweissen und im Hinblick auf eine anschliessende Lackierung mittels Elektrophorese ohne spezifische Zwischenbehandlung der Schweisstelle, dadurch gekennzeichnet, dass man einen Schweissdraht verwendet, in welchem Elemente enthalten sind, deren Oxydationsprodukte einen Schmelzpunkt oberhalb von 1600° C aufweisen.

2. Verfahren gemäss Anspruch 1, dadurch gekennzeichnet, dass der Schweissdraht wenigstens 0,05 % Ti enthält.

3. Verfahren gemäss Anspruch 1, dadurch gekennzeichnet, dass der Schweissdraht wenigstens 0,05 % Ti und 0,01 % Al enthält.

4. Verfahren gemäss Anspruch 1, dadurch gekennzeichnet, dass der Schweissdraht Ti (vorzugsweise 0,15 - 0,30 %),Al (vorzugsweise 0,03 bis 0,06 %),Mn (vorzugsweise 1,00 bis 1,60 %) und Si (vorzugsweise 0,50 bis 0,80 %) enthält.

5. Verfahren gemäss Anspruch 1, dadurch gekennzeichnet, dass der Schweissdraht Ti (0 bis 1 %), V (0 bis 1 %), Nb (0 bis 1 %) und Zr (0 bis 1 %) enthält, wobei die Summe der Zusatz-Konzentrationen über 0,05 % liegt.